# EUROPEAN PATENT SPECIFICATION

(11) **EP 2 514 584 B1**
(45) Date of publication and mention of the grant of the patent: **31.01.2018**
(21) Application number: 11162812.9
(22) Date of filing: 18.04.2011
(51) Int. Cl.: B29C 70/54, B29C 70/48, B29C 70/20, B29B 15/10

(54) **Bundle of roving yarns, method of manufacturing a bundle of roving yarns and method for manufacturing a work piece**
Garnbündel, Verfahren zur Herstellung eines Garnbündels und Verfahren zur Herstellung eines Werkstücks
Mêche de fils, procédé de fabrication d'une mêche de fils et procédé de fabrication d'une pièce

(43) Date of publication of application: 24.10.2012
(73) Proprietor: Siemens Aktiengesellschaft, 80333 München (DE)
(72) Inventor: Grove-Nielsen, Erik, 7870 Roslev (DK)

(56) References cited:
- EP-A1- 0 602 618
- EP-A1- 1 880 833
- EP-A1- 2 221 413
- EP-A2- 2 181 834
- WO-A1-2010/060913
- FR-A1- 2 948 692
- JP-A- 56 004 727
- US-A- 4 741 873
- US-B1- 6 454 251

## Description

The present invention is related to a method of manufacturing a wind turbine rotor blade.

In the document US 6,454,251 B1 a composite cord assembly is described for use to fabricate high performance structures, like for example coil springs, golf club shafts, fishing rods and other products composed of structural rods and tubes. In the document WO 2010/060913 A1 metal fibre yarn and a method for obtaining such a fibre yarn is disclosed. The fibre yarn comprises continuous metal fibres. In the document EP 0 602 618 A1 a process for preparing a blended tow for thermoplastic and reinforcing fibres is disclosed.

EP 2 181 834 A2 discloses a method of manufacturing a belt for a wind turbine rotor blade by means of Vacuum Assisted Resin Transfer Moulding.

EP1880833 discloses a process for the manufacture of a wind turbine blade, comprising the steps of providing on a tool a fibrous material having associated therewith an in-situ polymerisable non-fibrous form of a thermoplastic material; applying heat and a vacuum to said material; and additionally drawing into the fibrous material, from a source external to the tool, additional thermoplastic pre-polymer material. Fibre reinforced plastic composites are used in a variety of technical products such as cars, wind turbine blades, storage tanks etc. Most products of big size, such as wind turbine blades are manufactured by placing woven glass fabric, delivered on rolls, into one or more moulds. In the common resin injection process known as Vacuum Assisted Resin Transfer Moulding (VARTM), the moulds are closed, and vacuum is applied to the closed mould system. A resin, such as polyester, epoxy, vinyl ester or other, is then injected into the mould cavity, thus filling the space between the fibres in the laminates. In load bearing structures, a unidirectional glass fabric is often used. The glass fibre rovings in the fabric may be stitched together using yarns of polyester or similar material. In a long structure, such as a wind turbine blade, it is advantageous to use multiple layers of unidirectional fibre materials. The weaving process is costly, and often doubles the price of the fibre material.

For achieving high strength, an increased number of unidirectional fibre layers are typically placed in the mould. This requires much labour force, and leads to high cost of the final product.

It is an objective of the present invention to provide an advantageous method for manufacturing a wind turbine rotor blade.

This objective is solved by a method for manufacturing a wind turbine rotor blade as claimed in claim 1. The depending claims define further developments of the present invention.

The inventive method for manufacturing a wind turbine rotor blade comprises the steps of placing at least one bundle of roving yarn which comprises a number of roving yarns and a thermoplastic fibre in the centre of the roving yarn in a mould and consolidating the material by initial heating and melting the thermoplastic material, followed by cooling the material. In order to melt the thermoplastic material, the thermoplastic fibres mixed with reinforcement fibres can be heated, to for example 200°C. Then, the liquid thermoplastic material can flow in between the reinforced fibres, for example under vacuum. When cooled and solidified, the work piece is finished. This method provides a cheap and easily performable method for manufacturing a longitudinal unidirectional fibre material.

By means of the inventive method the bundle of fibre yarn can be supplied directly into the mould, or a machinery in the vicinity of the mould can be employed for assembling the roving yarns into bundles, that can be placed in the mould in a simple and fast way. Hence, the manufacturing of bundles of roving yarns simplifies the placing of unidirectional fibre material in a mould, for example for manufacturing a wind turbine blade. The bundles can easily be placed in the mould, for example by a robot.

Providing and using longitudinal unidirectional fibres assembled in bundles of 10 to 100 or more roving yarns has the advantage that they can replace woven fabrics, which are typically more expensive than the described bundles of roving yarns. The bundles of roving yarns provide a cost reducing material which can be used for manufacturing work pieces.

Advantageously, at least one resin distribution means or a thermoplastic material can be placed as additional component in the bundle. The resin distribution means may for example be a flow enhancing means or a resin transport means, which accommodates the resin flow for the impregnation of the fibres in the surrounding rovings. The resin distribution means or flow enhancing means or a resin transport means may have a higher permeability for liquid resin flow than the longitudinal unidirectional fibres.

In the bundle of roving yarns at least one porous yarn and/or at least one fibrous yarn and/or at least one permeable tube and/or at least one resin flow channel can be placed as resin distribution means in the bundle. The additional component serves as a fast resin transport channel, in order to reach a fast impregnation of the roving fibres. Instead of a porous yarn, a permeable tube of plastic, paper, or other material could be used.

Generally, glass fibres, carbon fibres, basalt fibres, aramid fibres or natural fibres, for example natural fibres from wood or plants, can be used as roving yarns.

Preferably, the bundle of roving yarns can be wrapped by a wrapping yarn. The wrapping yarn can be coiled around the bundle. Preferably, the wrapping yarn is an elastic yarn. Using an elastic yarn allows the bundle to change its round shape when placed in a mould, so that all bundles fit with no air voids between the bundles. Furthermore, the bundles can be stored on a bobbin and than used later, or the bundles can be transferred directly from a winding machine to a mould. Alternatively, yarns that are not elastic can also be foreseen.

The used roving yarn and/or the used wrapping yarn may comprise randomly oriented fibres or transverse fibres. The randomly oriented fibres or transverse fibres may for example be milled fibres, short fibres or long fibres. They can be placed on the outside of the bundle or in the outmost layer of the roving or can be included in the bundle or attached to the bundle. The use of randomly oriented fibres or longitudinal fibres enhances the shear strength of a laminate to be created by means of the inventive bundles. Another purpose of these randomly oriented fibres is to improve the crack resistance in these unidirectional fibre laminates. Randomly oriented short or long fibres can also be integrated in or placed on the resin yarn that holds the roving bundle together.

The present invention has the advantage that a fast production rate can be obtained with bundles instead of single roving laid in the mould. Moreover, an improved linear fibre orientation is obtained as no stitching yarns are creating waviness or resin rich pockets. Furthermore, a faster impregnation of the fibres can be done, due to a proper combination of vacuum channels and capillary forces. By use of the present invention laminates with extremely high stiffness (E-Modulus) can be fabricated.

Further features, properties and advantages of the present invention will become clear from the following description of embodiments in conduction with the companying drawings. The described features are advantageous separate or in any combination with each other.

Elements of the figure and embodiment which correspond to each other are designated with the same reference numeral.

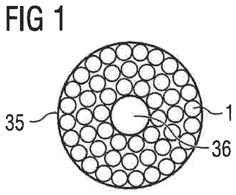

- Figure 1: schematically shows a bundle of rovings in a sectional view.

An embodiment of the present invention will now be described with reference to figure 1. Figure 1 schematically shows an bundle of rovings 35 in a sectional view. The bundle comprises a number of roving yarns 1 and a thermoplastic fibre 36. The thermoplastic fibre 36 is located in the center of bundle 35.

For manufacturing a wind turbine rotor blade the bundles 35, as shown in figure 1, can be placed in a mould. The thermoplastic fibre material 36, mixed with reinforced fibre material 1, can then be melted and solidified. In order to melt the thermoplastic material, the thermoplastic fibres mixed with reinforcement fibres can be heated, to for example 200°C. Then, the liquid thermoplastic material can flow in between the reinforced fibres, for example under vacuum. When cooled and solidified, the work piece is finished.

## Claims

1. A method for manufacturing a wind turbine rotor blade, comprising the steps of placing at least one bundle (35) of roving yarn which comprises a number of roving yarns (1) and a thermoplastic fibre (36) in the centre of the bundle (35) in a mould and consolidating by initial heating and melting the thermoplastic material, followed by cooling the material.

2. The method as claimed in claim 1, in which the at least one bundle (35) of roving yarn comprises at least one wrapping yarn.

3. The method as claimed in claim 2, in which the wrapping yarn comprises randomly oriented fibres or transverse fibres.

4. The method as claimed in any of the claims 1 to 3, in which the roving yarn (1) comprises randomly oriented fibres or transverse fibres.

5. The method as claimed in any of the claims 1 to 4, in which the thermoplastic material of the thermoplastic fibre (36) is assisted in flowing by means of vacuum.

6. The method as claimed in any of the claims 1 to 5, in which the initial heating is done at a temperature of 200 °C.

## Patentansprüche

1. Verfahren zum Herstellen eines Windturbinenrotorblatts, welches das Anordnen mindestens eines Bündels (35) Roving-Garn, das eine Anzahl Roving-Garne (1) und eine thermoplastische Faser (36) in der Mitte des Bündels (35) umfasst, in einem Formwerkzeug und das Verfestigen durch anfängliches Erwärmen und Schmelzen des thermoplastischen Materials und darauffolgendes Kühlen des Materials umfasst.

2. Verfahren nach Anspruch 1, bei dem das mindestens eine Bündel (35) Roving-Garn mindestens ein Wickelgarn umfasst.

3. Verfahren nach Anspruch 2, bei dem das Wickelgarn Wirrfasern oder Querfasern umfasst.

4. Verfahren nach einem der Ansprüche 1 bis 3, bei dem das Roving-Garn (1) Wirrfasern oder Querfasern umfasst.

5. Verfahren nach einem der Ansprüche 1 bis 4, bei dem ein Fließen des thermoplastischen Materials der thermoplastischen Faser (36) mit Hilfe eines Vakuums unterstützt wird.

6. Verfahren nach einem der Ansprüche 1 bis 5, bei dem das anfängliche Erwärmen bei einer Temperatur von 200°C erfolgt.

## Revendications

1. Procédé de fabrication d'une pale de rotor d'éolienne, comprenant les étapes consistant à placer au moins un faisceau (35) de fil roving qui comprend un certain nombre de fils roving (1) et une fibre thermoplastique (36) située au centre du faisceau (35) dans un moule et à consolider le matériau thermoplastique par chauffage initial et fusion, suivis d'un refroidissement du matériau.

2. Procédé selon la revendication 1, dans lequel le au moins un faisceau (35) de fil roving comprend au moins un fil de guipage.

3. Procédé selon la revendication 2, dans lequel le fil de guipage comprend des fibres orientées de manière aléatoire ou des fibres transversales.

4. Procédé selon l'une quelconque des revendications 1 à 3, dans lequel le fil roving (1) comprend des fibres orientées de manière aléatoire ou des fibres transversales.

5. Procédé selon l'une quelconque des revendications 1 à 4, dans lequel l'écoulement du matériau thermoplastique de la fibre thermoplastique (36) est facilité grâce au vide.

6. Procédé selon l'une quelconque des revendications 1 à 5, dans lequel le chauffage initial est mis en oeuvre à une température de 200°C.
